# EUROPÄISCHE PATENTSCHRIFT

(11) **EP 0 714 720 B1**
(45) Veröffentlichungstag und Bekanntmachung des Hinweises auf die Patenterteilung: **06.12.2000**
(21) Anmeldenummer: 95115489.7
(22) Anmeldetag: 30.09.1995
(51) Int. Cl.: B23D 19/04, B23D 31/00

(54) **Bearbeitungsmaschine mit Stanzeinrichtung und Einrichtung zur rollenden Werkstückbearbeitung**
Device for stamping out and cutting
Machine pour estamper et couper

(30) Priorität: 22.10.1994 DE 9417032 U
(43) Veröffentlichungstag der Anmeldung: 05.06.1996
(73) Patentinhaber: Trumpf GmbH & Co, D-71254 Ditzingen (DE)
(72) Erfinder: Bytow, Peter, D-75397 Simmozheim (DE)
(74) Vertreter: KOHLER SCHMID + PARTNER

(56) Entgegenhaltungen:
- EP-A- 0 107 971
- WO-A-95/19233
- GB-A- 947 077

## Beschreibung

Die Erfindung betrifft eine Bearbeitungsmaschine zum Bearbeiten plattenförmiger Werkstücke mit einer Stanzeinrichtung sowie mit wenigstens einer weiteren Bearbeitungseinrichtung.

Derartige Bearbeitungsmaschinen werden zur zeitlich parallelisierten oder zur zeitlich aufeinanderfolgenden Durchführung mehrerer Bearbeitungsvorgänge an dem zu bearbeitenden Werkstück eingesetzt.

So ist aüs US-A-4,250,784 eine gattungsgemäße Bearbeitungsmaschine bekannt, an der neben einer Stanzstation zum Lochen von Blechen eine weitere Stanzstation zum Zuschneiden des zuvor gelochten Bleches vorgesehen ist. An der letztgenannten Bearbeitungseinrichtung wird das Blech relativ zu einem auf und ab bewegten Stanzmesser verschoben und mittels diesem zertrennt. In Fällen, in denen die Länge des einzubringenden Trennschlitzes die Länge des Stanzmessers in Richtung der Schnittkante übersteigt, ist das Stanzmesser zum Einbringen des Trennschlitzes mehrfach auf und ab zu bewegen. Dabei ist das zu bearbeitende Blech mehrfach gegenüber dem Stanzmesser nachzusetzen. Aufgrund des beschriebenen diskontinuierlichen Bearbeitungsablaufs lassen sich an der bekannten Bearbeitungsmaschine lediglich verhältnismäßig niedrige Trenngeschwindigkeiten erzielen. Jede Nachsetzbewegung des zu bearbeitenden Blechs gegenüber dem Stanzmesser ist mit einer ruckartigen Beschleunigung sowie einem ebenfalls ruckartigen Abbremsen des Bleches verbunden. Hieraus resultieren gegebenenfalls ruckartige Belastungen der Blechführung, an der das Blech während der Bearbeitung gehalten ist und mittels derer das Blech gegenüber dem Stanzmesser nachgesetzt wird. Darüber hinaus erfordert das stanzende Zertrennen des Bleches wie jede schlagartige Werkstückbearbeitung generell verhältnismäßig hohe Bearbeitungskräfte.

Die gemäß Art. 158, 54(3) EPÜ zu berücksichtigende Druckschrift WO-A-95/19233 beschreibt eine Bearbeitungsmaschine zum Bearbeiten plattenförmiger Werkstücke mit einer Stanzeinrichtung sowie mit wenigstens einer weiteren Bearbeitungseinrichtung in Form einer Einrichtung zur rollenden Bearbeitung des Werkstücks mit wenigstens einem zwei Werkzeugteile umfassenden Rollenwerkzeug, wobei die Werkzeugteile an einander gegenüberliegendeh Seiten des zu bearbeitenden Werkstücks angeordnet sind und das eine Werkzeugteil wenigstens eine, relativ zu dem zu bearbeitenden Werkstück verschiebbare und dieses beaufschlagende Bearbeitungsrolle oder dergleichen aufweist und an dem anderen Werkzeugteil wenigstens ein mit der Bearbeitungsrolle zusammenwirkendes Bearbeitungsgegenstück vorgesehen ist. Die Bearbeitungsrollen der Maschine nach WO-A-95/19233 werden über das zu bearbeitende Werkstück in Drehung versetzt und sind nicht mit einer Antriebseinrichtung verbunden. Der Erfindung liegt aüsgehend von US-A-4,250,784

die Aufgabe zugrunde, eine Bearbeitungsmaschine zu schaffen, die eine kontinuierliche und somit insbesondere schnelle und gleichförmige Werkstückbearbeitung mit verhältnismäßig geringen Bearbeitungskräften erlaubt.

Diese Aufgabe wird erfindungsgemäß dadurch gelöst, daß an einer Bearbeitungsmaschine der eingangs genannten Art als weitere Bearbeitungseinrichtung eine Einrichtung zur rollenden Bearbeitung des Werkstücks vorgesehen ist mit wenigstens einem zwei Werkzeugteile umfassenden Rollenwerkzeug, wobei die Werkzeugteile an einander gegenüberliegenden Seiten des zu bearbeitenden Werkstücks angeordnet sind und das eine Werkzeugteil wenigstens eine, relativ zu dem zu bearbeitenden Werkstück verschiebbare und dieses beaufschlagende Bearbeitungsrolle od.dgl. aufweist und an dem anderen Werkzeugteil wenigstens ein mit der Bearbeitungsrolle zusammenwirkendes Bearbeitungsgegenstück vorgesehen ist und wobei wenigstens eine Bearbeitungsrolle, mit einer Antriebseinrichtung verbunden, angetrieben drehbar ist. Bei einer rollenden Bearbeitung ergibt sich eine kontinuierliche Relativbewegung zwischen dem Werkstück und dem das Werkstück permanent beaufschlagenden Rollenwerkzeug. Infolgedessen lassen sich Bearbeitungsgeschwindigkeiten realisieren, die ein Mehrfaches der Geschwindigkeiten bei diskontinuierlicher Werkstückbearbeitung betragen. Ruckartige, die Bearbeitungsmaschine bzw. Teile von dieser besonders belastende Relativbewegungen zwischen dem Rollenwerkzeug und dem Werkstück werden vermieden. Schließlich erfordert die rollende Werkstückbearbeitung lediglich verhältnismäßig geringe Bearbeitungskräfte. Mittels der angetriebenen Bearbeitungsrolle läßt sich das zu bearbeitende Werkstück gleichförmig in das Rollenwerkzeug einziehen. Dieser Umstand ist beispielsweise für die Bearbeitung dünner und/oder großflächiger Blechtafeln von besonderer Bedeutung. An erfindungsgemäßen Bearbeitungsmaschinen, die mit einer sogenannten Koordinatenführung zum Verschieben der daran eingespannten Blechtafel relativ zu der Stanzeinrichtung versehen sind, kann die Koordinatenführung zwar auch zum Verschieben der Blechtafel relativ zu dem Rollenwerkzeug genutzt werden. Besitzt die Blechtafel jedoch eine lediglich geringe Materialstärke, so sind bei der rollenden Werkstückbearbeitung insbesondere in Werkstückbereichen, die verhältnismäßig weit von der Werkstückeinspannung an der Koordinatenführung abliegen, unerwünschte Verformungen der Blechtafel zu befürchten. So hat die Erfahrung bei der Entwicklung erfindungsgemäßer Bearbeitungsmaschinen gezeigt, daß sich dünne Blechtafeln, welche ausschließlich mittels der Koordinatenführung gegenüber dem Rollenwerkzeug verschoben werden, im Werkzeugbereich häufig verwellen. Eine derartige unerwünschte Werkstückdeformation tritt nicht auf, wenn die Relativverschiebung des Werkstücks relativ zu dem Rollenwerkzeug mittels einer oder mehrerer angetriebener Bearbeitungrollen bewerkstelligt wird. Entsprechende Vorteile hinsichtlich der Bearbeitungsqualität bietet eine Ausführungsform der erfindungsgemäßen Bearbeitungsmaschine, an der wenigstens eine Bearbeitungsrolle des Rollenwerkzeugs synchronisiert mit der das zu bearbeitende Werkstück verschiebenden Koordinatenführung angetrieben ist.

Zur Verbesserung des Werkstückvorschubs ist in vorteilhafter Ausgestaltung der Erfindung vorgesehen, daß die Einrichtung zur rollenden Bearbeitung des Werkstücks wenigstens eine angetriebene und sich an dem zu bearbeitenden Werkstück abstützende Vorschubrolle aufweist. Die Vorschubrolle unterstüzt das mittels der Bearbeitungsrolle bewerkstelligte Einziehen des zu bearbeitenden Werkstücks in das Rollenwerkzeug.

Zweckmäßigerweise ist die Vorschubrolle dabei mit der (den) angetriebenen Bearbeitungsrolle (n) antriebsverbunden. An einer derartigen Bearbeitungsmaschine wird zum Antrieb der Vorschubrolle (n) sowie zum Antrieb der Bearbeitungsrolle (n) lediglich eine Antriebseinrichtung benötigt.

Zur Verbesserung der Reibung zwischen dem Werkstück und der Vorschubrolle ist in Weiterbildung der Erfindung vorgesehen, daß die Vorschubrolle an ihrer an dem Werkstück anliegenden Lauffläche einen Reibbelag aufweist. Das Material des Reibbelages kann in Abhängigkeit von dem Material des zu bearbeitenden Werkstücks gewählt werden.

Sind die Bearbeitungsrolle und das zugeordnete Bearbeitungsgegenstück um eine im wesentlichen senkrecht zu der Werkstückebene verlaufende Achse drehbar und in der jeweiligen Drehstellung arretierbar, wie dies in weiterer vorteilhafter Ausgestaltung der Erfindung vorgesehen ist, so lassen sich an der Einrichtung zur rollenden Bearbeitung des Werkstücks verschiedene Bearbeitungsrichtungen vorgeben. In Abhängigkeit von der Ausbildung der Arretierung für die Bearbeitungsrolle bzw. für das zugeordnete Bearbeitungsgegenstück läßt sich die Bearbeitungsrichtung stufenlos oder in Stufen verstellen. Bei entsprechender Lagerung von Bearbeitungsrolle und Bearbeitungsgegenstück bzw. bei entsprechender Ausbildung der Arretierung der genannten Bauteile kann deren Drehstellung bezogen auf die im wesentlichen senkrecht zu der Werkstückebene verlaufende Achse während des Bearbeitungsvorgangs geändert werden. Auf diese Art und Weise wird eine kurvenförmige Werkstückbearbeitung ermöglicht. Zum Drehen von Bearbeitungsrolle und Bearbeitungsgegenstück während des Bearbeitungsvorganges empfiehlt sich der Einsatz eines motorischen Drehantriebs.

In Weiterbildung der Erfindung ist außerdem vorgesehen, daß die Bearbeitungsrolle und/oder das Bearbeitungsgegenstück im wesentlichen senkrecht zu der Werkstückebene verschiebbar und in der jeweiligen Verschiebestellung arretierbar ist. Auf die beschriebene Art und Weise läßt sich die Relativstellung von Bearbeitungsrolle und Bearbeitungsgegenstück senkrecht zu der Werkstückebene variieren. Das Rollenwerkzeug kann dadurch beispielsweise an wechselnde Werkstückdicken angepaßt werden. Darüber hinaus bietet sich die Möglichkeit, als Einrichtung zur rollenden Bearbeitung des Werkstücks eine modifizierte Stanzeinrichtung zu verwenden. Dabei können die Werkzeugteile des Rollenwerkzeugs die Stelle von Stanzstempel und Stanzmatrize einnehmen.

Eine bevorzugte Ausführungsform der erfindungsgemäßen Bearbeitungsmaschine, an der die Stanzeinrichtung an einer Seite des Werkstücks einen im wesentlichen senkrecht zu dem Werkstück heb- und senkbaren Stößel mit einer Aufnahme für einen austauschbaren Stanzstempel sowie an der gegenüberliegenden Seite des Werkstücks eine dem Stanzstempel zugeordnete und an einem Matrizenhalter austauschbar gehaltene Stanzmatrize aufweist, zeichnet sich dadurch aus, daß das eine Werkzeugteil des Rollenwerkzeugs an der Aufnahme für den Stanzstempel mit dem Stößel und das andere Werkzeugteil mit dem Matrizenhalter der Stanzeinrichtung verbindbar ist. An einer derartigen Bearbeitungsmaschine kann eine vorhandene Bearbeitungsstation zum Durchführen verschiedener Bearbeitungsvorgänge genutzt werden. Je nach Art der gewünschten Werkstückbearbeitung werden in die Aufnahme an dem Stößel der Stanzeinrichtung die Teile des Stanzwerkzeugs oder die Teile des Werkzeugs zur rollenden Bearbeitung des Werkstücks eingesetzt. Im letztgenannten Fall läßt sich der für die Werkstückbearbeitung bedeutsame Abstand der Bearbeitungsrolle sowie des Bearbeitungsgegenstücks des Rollenwerkzeugs senkrecht zu dem zu bearbeitenden Werkstück durch entsprechendes Anheben bzw. Absenken des Stößels variieren. Aufgrund der Verwendung einer mehrfach genutzten Bearbeitungsstation ergibt sich eine äußerst klein bauende Maschine. Bei Vorhandensein entsprechender Werkzeugwechselvorrichtungen kann der Werkzeugwechsel automatisiert durchgeführt werden.

Im Falle einer weiteren bevorzugten Ausführungsform der erfindungsgemäßen Bearbeitungsmaschine, bei der der Stanzstempel mittels eines Drehantriebs um eine im wesentlichen senkrecht zu der Werkstückebene verlaufende Achse drehbar ist, ist (sind) die angetriebene(n) Bearbeitungsrolle(n) an dem dem Stößel zugeordneten Werkzeugteil vorgesehen und mittels des Drehantriebs für den Stanzstempel antreibbar. Der Drehantrieb des Stanzstempels, mittels dessen bei Stanzbetrieb der Bearbeitungsmaschine der Stanzstempel vor Beginn der Werkstückbearbeitung in der gewünschten Drehwinkelstellung gegenüber dem Werkstück ausgerichtet wird, übernimmt bei dieser Ausführungsform der erfindungsgemäßen Bearbeitungsmaschine zusätzlich die Funktion des Antriebs für die umlaufende(n) Bearbeitungsrolle(n) des Rollenwerkzeugs. Zwar kann erfindungsgemäß für die Bearbeitungsrolle(n) auch ein separater Antrieb vorgesehen sein, im Falle der beschriebenen Ausführungsform der erfindungsgemäßen Bearbeitungsmaschine erübrigt sich jedoch ein derartiger zusätzlicher Antrieb.

Ist der Stanzstempel in der Aufnahme des Stößels gegenüber diesem drehfest gehalten und der Stößel mittels des Drehantriebs um die im wesentlichen senkrecht zu dem Werkstück verlaufende Achse drehbar, so empfiehlt es sich, daß die angetriebene(n) Bearbeitungsrolle(n) über ein Kegelradgetriebe mit einem Stößelkegelrad und wenigstens einem Bearbeitungsrollenkegelrad antreibbar ist (sind), wobei das Stößelkegelrad konzentrisch mit der Drehachse des Stößels angeordnet und mit diesem drehfest verbunden ist und wobei das Bearbeitungsrollenkegelrad konzentrisch mit der Drehachse der Bearbeitungsrolle angeordnet und mit dieser drehfest verbunden ist. Auf diese Art und Weise läßt sich an erfindungsgemäßen Bearbeitungsmaschinen mit herkömmlichen Getriebekomponenten ein robustes und funktionssicheres Getriebe zum Antreiben der Bearbeitungsrolle(n) des Rollenwerkzeugs realisieren.

Als Einrichtung zur rollenden Bearbeitung des Werkstücks kann an erfindungsgemäßen Bearbeitungsmaschinen beispielsweise eine Rollenpreßeinrichtung, vorzugsweise eine Sickeneinrichtung, mit einem Rollenpreßwerkzeug vorgesehen sein, wobei die Werkzeugteile als Bearbeitungsrolle und als Bearbeitungsgegenstück zueinander komplementäre und das zu bearbeitende Werkstück pressend beaufschlagende Formrollen aufweisen, von denen wenigstens eine, mit der Antriebseinrichtung verbunden, angetrieben drehbar ist.

Alternativ oder zusätzlich zu der Rollenpreßeinrichtung kann an erfindungsgemäßen Bearbeitungsmaschinen als Einrichtung zur rollenden Bearbeitung des Werkstücks eine Rollenschneideinrichtung mit einem Rollenschneidwerkzeug vorgesehen sein. An derartigen Bearbeitungsmaschinen lassen sich hohe Schnittgeschwindigkeiten erreichen und annähernd gratfreihe Schnittkanten herstellen. Das angewandte Trennverfahren ist nahezu lautlos.

Weisen die Werkzeugteile des Rollenschneidwerkzeugs, wie in Weiterbildung der Erfindung vorgesehen, als Bearbeitungsrolle und als Bearbeitungsgegenstück jeweils eine Schneidrolle auf und ist wenigstens eine Schneidrolle, mit der Antriebseinrichtung verbunden, angetrieben drehbar, so ergibt sich zusätzlich zu den aus den vorstehenden Ausführungen zu entnehmenden Vorteilen der Verwendung einer angetriebenen Schneidrolle der Vorteil eines abfallfreien und spanlosen Zuschnitts des zu bearbeitenden Werkstücks. Anstelle einer Schneidrolle kann an einem Werkzeugteil grundsätzlich auch eine mit der Schneidrolle an dem anderen Werkzeugteil zusammenwirkende Schneidleiste vorgesehen sein.

Im Falle einer anderen vorteilhaften Ausführungsform der erfindungsgemäßen Bearbeitungsmaschine sind an dem einen Werkzeugteil des Rollenschneidwerkzeugs eine Schneidrolle und an dem anderen Werkzeugteil zwei mit Abstand in Richtung ihrer Drehachsen miteinander fluchtende Gegenschneidrollen vorgesehen, wobei die Schneidrolle und/oder wenigstens eine Gegenschneidrolle, mit der Antriebseinrichtung verbunden, angetrieben drehbar ist. Mit Hilfe einer derart ausgebildeten Bearbeitungsmaschine lassen sich die zu bearbeitenden Werkstücke unter Abtrennen eines Werkstückstreifens schlitzen. Das schlitzende Trennverfahren zeichnet sich dadurch aus, daß bei einer Abscherbewegung in Richtung der Gegenschneidrollen eine Verformung des zu bearbeitenden Werkstücks im Bereich der parallel zueinander verlaufenden Schlitzkanten vermieden wird. In diesen Bereichen liegt das an der einen Seite durch die Schneidrolle belastete Werkstück nämlich auf den an der Werkstückgegenseite angeordneten Gegenschneidrollen auf. Da dementsprechend an den Schlitzkanten nahezu keine Verformungsarbeit aufgewandt werden muß, kann die an dem Rollenschneidwerkzeug eingeleitete Bearbeitungskraft weitestgehend zweckgemäß zum Abscheren des den Trennschlitz freigebenden Werkstückstreifens genutzt werden. Infolgedessen läßt sich die Werkstückbearbeitung mit verhältnismäßig geringem Kraftaufwand bewerkstelligen. Darüber hinaus bietet das schlitzende Trennverfahren insbesondere an Bearbeitungsmaschinen mit einer Stanzeinrichtung den besonderen Vorteil, daß zunächst der Anfangs- sowie der Endbereich des zu erstellenden Trennschlitzes mit Hilfe des Stanzwerkzeugs ausgeräumt werden kann, ehe dann das schlitzende Rollenschneidwerkzeug den dazwischen anstehenden Materialstreifen heraustrennt. Durch entsprechendes Ausrichten des Werkstücks gegenüber dem Stanzwerkzeug wird die Lage des Anfangs- und des Endpunkts des Trennschlitzes eindeutig definiert. Dies gilt insbesondere für die Anfangs- und Endpunkte unter einem Winkel aneinanderstoßender Trennschlitze, welche beispielsweise ein aus einer Blechtafel herauszutrennendes Einzelblech einfassen. In diesem Fall lassen sich die Anfangsbereiche der an einer Ecke des Einzelblechs ansetzenden und winkelig zueinander verlaufenden Trennschlitze mittels des Stanzwerkzeugs auf einfache Art und Weise derart einbringen, daß die Trennschlitze ohne sich zu kreuzen von einem gemeinsamen Eckpunkt ausgehen. Ein derartiges überschneidungsfreies Ansetzen aneinanderstoßender Trennschlitze mittels eines Rollenschneidwerkzeugs bedarf einer genauen Steuerung des Schneidvorgangs.

Eine weitere bevorzugte Ausführungsform der erfindungsgemäßen Bearbeitungsmaschine, die miteinander zusammenwirkende Schneidrollen aufweist, zeichnet sich dadurch aus, daß unmittelbar benachbart zu den Schneidrollen jeweils eine konzentrisch mit der zugeordneten Schneidrolle angeordnete und sich an dem zu bearbeitenden Werkstück abstützende Druckrolle vorgesehen ist, wobei die Schneidrolle eines Werkzeugteils jeweils gegenüber der Druckrolle des anderen Werkzeugteils angeordnet ist und die Druckrollen wenigstens in dem dem Werkstück zugewandten Bereich im wesentlichen senkrecht zu dem Werkstück elastisch verformbar sind. Die Druckrollen dienen dazu, das Werkstück beidseits des mittels der Schneidrollen eingebrachten Schnittes abzustützen und dadurch einer unerwünschten Verformung des Werkstücks im Bereich der Schnittlinie entgegenzuwirken.

Zweckmäßigerweise ist dabei die der angetriebenen Schneidrolle zugeordnete Druckrolle drehfest mit dieser verbunden. In diesem Fall kann nämlich die Druckrolle gleichzeitig als Vorschubrolle zur Relativverschiebung des Werkstücks gegenüber dem Rollenwerkzeug genutzt werden.

Die Erfindung wird nachfolgend anhand schematischer Darstellungen zu Ausführungsbeispielen näher erläutert. Es zeigen:
- Figur 1: eine Bearbeitungsmaschine zur Bearbeitung von Blechtafeln mit einer Stanzstation sowie einer separaten Rollenschneidstation,
- Figur 2: eine Teilschnittdarstellung der Rollenschneidstation einer weiteren Ausführungsform einer Bearbeitungsmaschine zum Bearbeiten von Blechtafeln,
- Figur 3: eine Prinzipdarstellung der Bearbeitungsstation einer Bearbeitungsmaschine mit einer einzigen Bearbeitungsstation mit Rollenschneidwerkzeug,
- Figur 4a: das Oberwerkzeug eines Rollenschneidwerkzeugs für eine Bearbeitungsmaschine nach Figur 3 und
- Figur 4b: das Unterwerkzeug zu dem Oberwerkzeug nach Figur 4a.

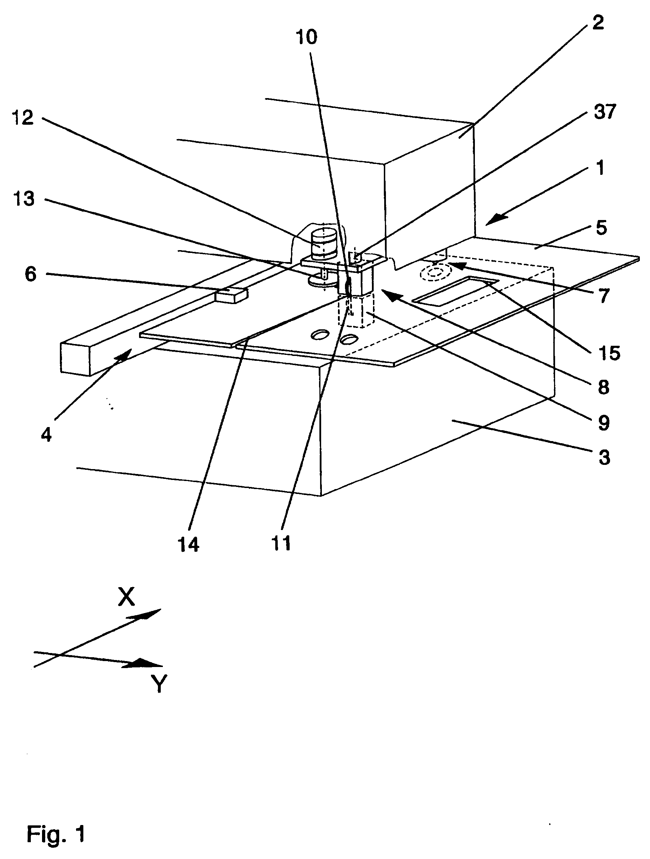

Die Bearbeitungsmaschine nach Figur 1 besitzt einen Maschinenständer 1 mit einem Maschinenoberteil 2 und einem Maschinenunterteil 3. In dem Zwischenraum zwischen dem Maschinenoberteil 2 und dem Maschinenunterteil 3 ist eine Koordinatenführung 4 für ein Werkstück in Form einer Blechtafel 5 angeordnet. Haltepratzen 6, von denen in Figur 1 lediglich eine erkennbar ist, dienen zum Einspannen der Blechtafel 5 an der Koordinatenführung 4. Mittels der Koordinatenführung 4 ist die Blechtafel 5 in der durch die Koordinatenachsen x, y definierten Werkstückebene verschiebbar.

Als Bearbeitungseinrichtungen sind an der dargestellten Bearbeitungsmaschine eine Stanzeinrichtung in Form einer Stanzstation 7 sowie eine separate Rollenschneideinrichtung in Form einer Rollenschneidstation 8 vorgesehen. Die Rollenschneidstation 8 ist mit einem Rollenschneidwerkzeug 9 bestückt. Das Rollenschneidwerkzeug 9 umfaßt oberhalb und unterhalb der Blechtafel 5 als Bearbeitungsrolle bzw. als Bearbeitungsgegenstück dienende Schneidrollen 10, 11. Wie an Rollenschneidwerkzeugen generell üblich sind die obere Schneidrolle 10 sowie die untere Schneidrolle 11 im Schneidbetrieb mit Uberlappung in zu der Ebene der Blechtafel 5 senkrechter Richtung angeordnet. Eine Antriebseinrichtung in Form eines Antriebsmotors 12 sowie ein Getriebe 13 dienen zum Antrieb der oberen Schneidrolle 10.

In dem in Figur 1 gezeigten Anwendungsfall sollen mittels der Bearbeitungsmaschine aus der Blechtafel 5 mehrere Einzelbleche mit nach einem vorgegebenen Stanzschema angeordneten Ausstanzungen gefertigt werden. Zu diesem Zweck wird die Blechtafel 5 zunächst an der Stanzstation 7 über ihre gesamte Fläche in der gewünschten Art und Weise gestanzt. Dabei wird die Blechtafel 5 mit Hilfe der Koordinatenführung 4 gegenüber der Stanzstation 7 verschoben und ausgerichtet.

Nach Abschluß der Stanzbearbeitung werden aus der Blechtafel 5 mittels der Rollenschneidstation 8 die Einzelbleche geschnitten. Zu diesem Zweck wird die Blechtafel 5 relativ zu dem Rollenschneidwerkzeug 9 verschoben. Hierzu dienen bei der dargestellten Bearbeitungsmaschine sowohl die Koordinatenführung 4, mittels derer die Blechtafel 5 relativ zu dem Rollenschneidwerkzeug 9 bewegt wird als auch die obere Schneidrolle 10 des Rollenschneidwerkzeugs 9, die angetrieben durch den Antriebsmotor 12 synchronisiert mit der Bewegung der Koordinatenführung 4 umläuft und dadurch die Blechtafel 5 einzieht. Mittels der oberen Schneidrolle 10 sowie der damit zusammenwirkenden unteren Schneidrolle 11 wird schließlich der Trennschnitt eingebracht.

Sowohl die obere Schneidrolle 10 als auch die untere Schneidrolle 11 sind um eine senkrecht zu der Werkstückebene verlaufende Achse 37 drehbar und in der jeweiligen Drehstellung arretierbar. Infolgedessen lassen sich mit dem Rollenschneidwerkzeug 9 in der Ebene der Blechtafel 5 Trennschnitte in unterschiedlichen Richtungen herstellen. In Figur 1 angedeutet sind ein Trennschnitt 14 in Richtung der y-Koordinate sowie ein Trennschnitt 15 in Richtung der x-Koordinate.

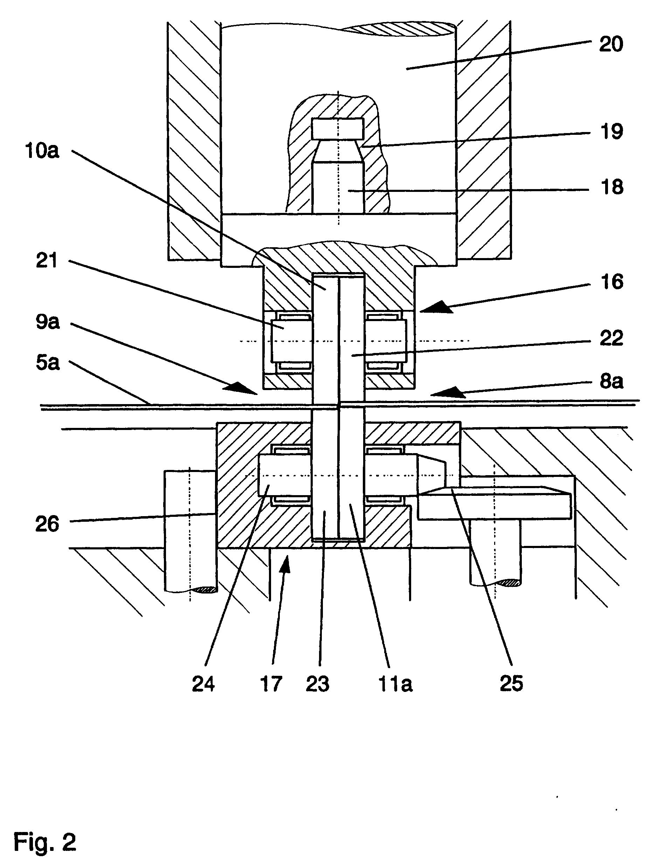

Eine in Figur 2 dargestellte Rollenschneideinrichtung in Form einer Rollenschneidstation 8a ist an der betreffenden Bearbeitungsmaschine neben einer nicht gezeigten Stanzstation vorgesehen. Die Rollenschneidstation 8a ist mit einem Rollenschneidwerkzeug 9a versehen, das sich aus einem oberen Werkzeugteil 16 sowie aus einem unteren Werkzeugteil 17 zusammensetzt. An einem Schaft 18 wird das obere Werkzeugteil 16 in einer Aufnahme 19 eines gegenüber einem Werkstück in Form einer Blechtafel 5a heb- und senkbaren Stößels 20 gehalten. An ihren der Blechtafel 5a zugewandten Seiten sind das obere Werkzeugteil 16 und das untere Werkzeugteil 17 mit einer Bearbeitungsrolle bzw. einem Bearbeitungsgegenstück in Form einer oberen Schneidrolle 10a bzw. einer unteren Schneidrolle 11a versehen. Die obere Schneidrolle 10a sitzt drehfest auf einer Rollenachse 21. Unmittelbar benachbart zu der oberen Schneidrolle 10a trägt die Rollenachse 21 eine ebenfalls drehfest angebrachte Druckrolle 22.

Die untere Schneidrolle 11a sitzt unmittelbar benachbart zu einer unteren Druckrolle 23 drehfest auf einer in dem unteren Werkzeugteil 17 drehbar gelagerten Rollenwelle 24. Die Rollenwelle 24 ist über ein Kegelradgetriebe 25 mit einer nicht dargestellten Antriebseinrichtung verbunden. Sowohl die obere Druckrolle 22 als auch die untere Druckrolle 23 ist in ihrem der Blechtafel 5a zugewandten Bereich aus einem elastischen Gummi gefertigt. Das untere Werkzeugteil 17 ist in einer Aufnahme 26 gelagert. Insgesamt handelt es sich bei der Rollenschneidstation 8a um eine modifizierte Stanzstation. In den ansonsten zur Aufnahme eines Stanzstempels bestimmten Stößel 20 ist in dem dargestellten Fall das obere Werkzeugteil 16 des Rollenschneidwerkzeugs 9a eingesetzt. Das untere Werkzeugteil 17 ersetzt die dem Stanzstempel im Stanzbetrieb zugeordnete Stanzmatrize.

Hinsichtlich Art und Abfolge der Werkstückbearbeitung stimmen die in Figur 1 gezeigte Bearbeitungsmaschine sowie die in Figur 2 teilweise dargestellte Bearbeitungsmaschine im wesentlichen überein. So wird auch an der Rollenschneidstation 8a gemäß Figur 2 die zuvor bereits gestanzte Blechtafel 5a sowohl mittels einer nicht dargestellten Koordinatenführung als auch mittels der oberen Schneidrolle 10a relativ zu dem Rollenschneidwerkzeug 9a verschoben. Allerdings wird an der Rollenschneidstation 8a nach Figur 2 das Einziehen der zu bearbeitenden Blechtafel 5a in das Rollenschneidwerkzeug 9a noch durch die untere Druckrolle 23 unterstützt. Die untere Druckrolle 23, die gemeinsam mit der unteren Schneidrolle 11a angetrieben wird, wirkt als Vorschubrolle. Im übrigen dienen die obere Druckrolle 22 sowie die untere Druckrolle 23 dazu, Abbiegungen der Blechtafel 5a im Bereich des mittels des Rollenschneidwerkzeugs 9a eingebrachten Trennschnitts zu vermeiden.

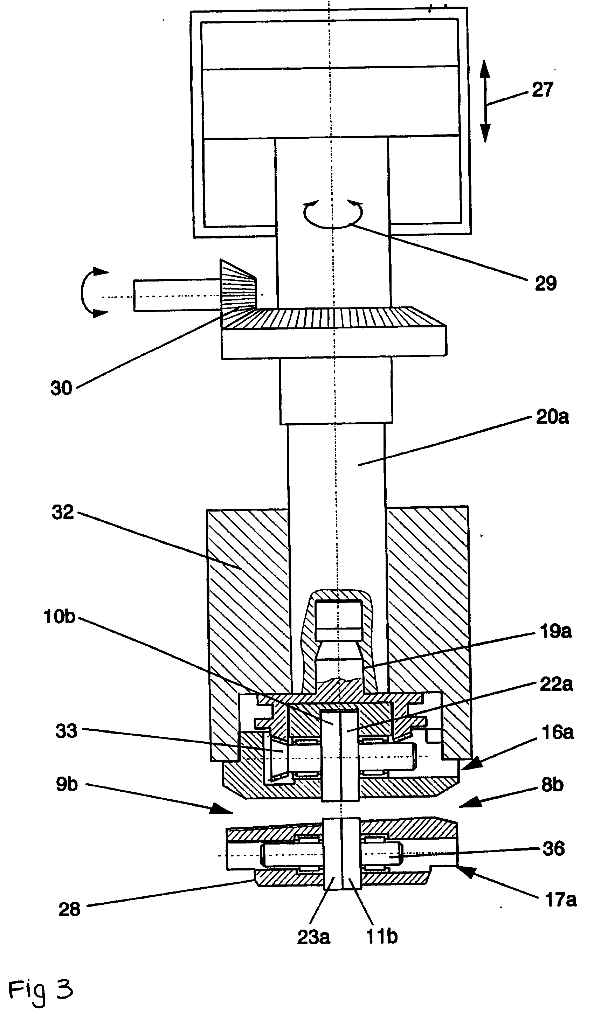

Figur 3 zeigt eine Bearbeitungsstation, die sowohl als Stanzeinrichtung als auch, wie in Figur 3 dargestellt, als Rollenschneideinrichtung 8b genutzt werden kann. In einer Aufnahme 19a eines in Richtung eines Doppelpfeils 27 in einer Stößelführung 32 heb- und senkbaren Stößels 20a ist ein oberes Werkzeugteil 16a eines Rollenschneidwerkzeugs 9b austauschbar festgelegt. Ein unteres Werkzeugteil 17a ist in einer Aufnahme 28 ebenfalls austauschbar fixiert. Alternativ kann in die Aufnahme 19a des Stößels 20a ein nicht dargestellter Stanzstempel und in die Aufnahme 28 eine nicht dargestellte, dem Stanzstempel zugeordnete Stanzmatrize eingesetzt werden.

Zusätzlich zu der Auf- und Abbewegung in Richtung des Doppelpfeils 27 kann der Stößel 20a im Sinne eines Doppelpfeils 29 eine Drehbewegung um eine senkrecht zu der Werkstückebene verlaufende Drehachse ausführen. Die Drehbewegung des Stößels 20a in Richtung des Doppelpfeils 29 dient bei Stanzbetrieb der Bearbeitungsstation dazu, den in der Aufnahme 19a festgelegten Stanzstempel in die für die Werkstückbearbeitung erforderliche Drehstellung um die senkrecht zu der Werkstückebene verlaufende Drehachse zu überführen. Dabei versetzt ein nicht dargestellter Antriebsmotor den Stößel 20a über ein Kegelradgetriebe 30 in Drehung.

Bei der Werkstückbearbeitung wird die in Figur 3 dargestellte Bearbeitungsstation zunächst als Stanzstation verwendet. Zu diesem Zweck sind in die Aufnahme 19a an dem Stößel 20a sowie in die Aufnahme 28 ein Stanzstempel sowie eine zugehörige Stanzmatrize eingesetzt. Nach Abschluß der Stanzbearbeitung wird der Stanzstempel gegen das gezeigte obere Werkzeugteil 16a und die Stanzmatrize gegen das gezeigte untere Werkzeugteil 17a ausgetauscht. Dabei ist das obere Werkzeugteil 16a mit einer oberen Schneidrolle 10b und das untere Werkzeugteil 17a mit einer unteren Schneidrolle 11b versehen. Die obere Schneidrolle 10b und die untere Schneidrolle 11b dienen als Bearbeitungsrolle bzw. Bearbeitungsgegenstück. Entsprechend Figur 2 sind unmittelbar benachbart zu den Schneidrollen 10b, 11b eine obere Druckrolle 22a bzw. eine untere Druckrolle 23a angeordnet. Im Gegensatz zu der in Figur 2 dargestellten Bearbeitungsstation ist an der Bearbeitungsstation nach Figur 3 die obere Schneidrolle 10b angetrieben. Zum Antrieb der oberen Schneidrolle 10b dient dabei der Drehantrieb, mittels dessen der Stößel 20a in Richtung des Doppelpfeils 29 gedreht werden kann.

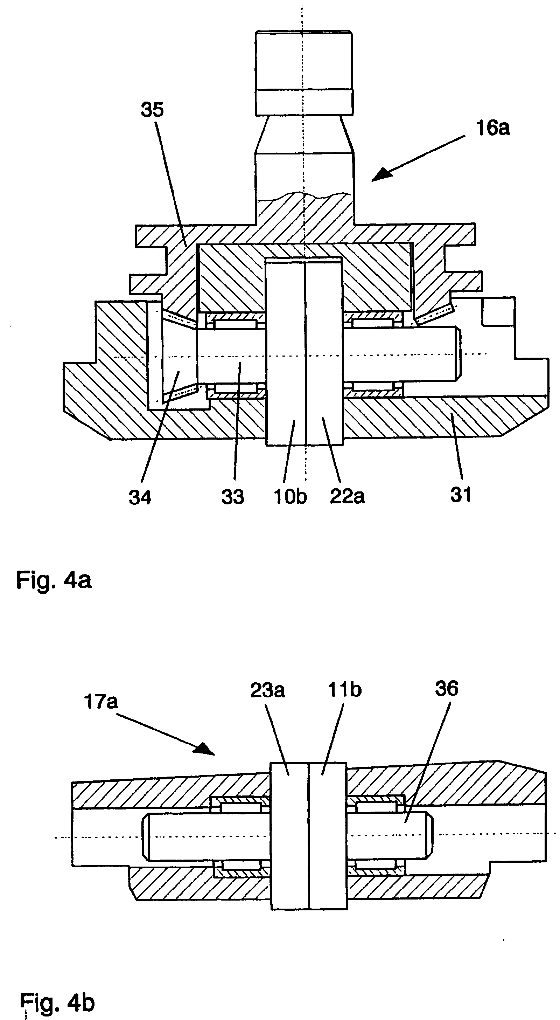

Zu diesem Zweck ist ein in Figur 4a im einzelnen dargestellter Rollenhalter 31 des oberen Werkzeugteils 16a drehfest mit der Stößelführung 32 verbunden. An dem Rollenhalter 31 drehbar gelagert ist eine Antriebswelle 33, auf der die obere Schneidrolle 10b sowie die obere Druckrolle 22a drehfest aufsitzen. Auf der Antriebswelle 33 ebenfalls drehfest angebracht ist ein Bearbeitungsrollenkegelrad 34, das mit einem drehfest mit dem Stößel 20a verbundenen Stößelkegelrad 35 kämmt.

Wird nun der Stößel 20a im Sinne des Doppelpfeils 29 in Drehung versetzt, so wird diese Drehbewegung über das mit dem Stößel 20a rotierende Stößelkegelrad 35 und das Bearbeitungsrollenkegelrad 34 in eine Drehbewegung der Antriebswelle 33 und somit der oberen Schneidrolle 10b sowie der oberen Druckrolle 22a umgewandelt. Die Druckrolle 22a übernimmt demnach die Funktion einer Vorschubrolle für das zu bearbeitende Werkstück.

Wie Figur 4b im einzelnen zeigt, ist die untere Schneidrolle 11b sowie die dieser benachbarte untere Druckrolle 23a auf einer Rollenachse 36 drehfest gelagert. Dabei ist die untere Druckrolle 23a der oberen Schneidrolle 10b und die obere Druckrolle 22a der unteren Schneidrolle 11b gegenüberliegend angeordnet. Auf diese Art und Weise werden die Werkstückbereiche beidseits der Schnittlinie an einer Seite von einer Schneidrolle und an der gegenüberliegenden Seite von einer Druckrolle beaufschlagt. Dabei wirken die Druckrollen 22a, 23a mit einer elastischen Gegenkraft dem von den Schneidrollen 10b, 11b ausgeübten Druck entgegen und verhindern dadurch eine nennenswerte Umbiegung der Schnittkanten des zu bearbeitenden Werkstücks.

Zur Variierung der Schnittrichtung kann sowohl die obere Schneidrolle 10b als auch die untere Schneidrolle 11b um eine senkrecht zu der Ebene des nicht dargestellten Werkstücks verlaufende Achse gedreht und in dieser Drehstellung fixiert werden.

## Patentansprüche

1. Bearbeitungsmaschine zum Bearbeiten plattenförmiger Werkstücke (5, 5a) mit einer Stanzeinrichtung (7) sowie mit wenigstens einer weiteren Bearbeitungseinrichtung, dadurch gekennzeichnet, daß als weitere Bearbeitungseinrichtung eine Einrichtung zur rollenden Bearbeitung des Werkstücks (5, 5a) vorgesehen ist mit wenigstens einem zwei Werkzeugteile (16, 16a, 17, 17a) umfassenden Rollenwerkzeug (9, 9a, 9b), wobei die Werkzeugteile (16, 16a, 17, 17a) an einander gegenüberliegenden Seiten des zu bearbeitenden Werkstücks (5, 5a) angeordnet sind und das eine Werkzeugteil (16, 16a, 17, 17a) wenigstens eine, relativ zu dem zu bearbeitenden Werkstück (5, 5a) verschiebbare und dieses beaufschlagende Bearbeitungsrolle (10, 10a, 10b, 11, 11a, 11b) od. dgl. aufweist und an dem anderen Werkzeugteil (16, 16a, 17, 17a) wenigstens ein mit der Bearbeitungsrolle (10, 10a, 10b, 11, 11a, 11b) zusammenwirkendes Bearbeitungsgegenstück (10, 10a, 10b, 11, 11a, 11b) vorgesehen ist und wobei wenigstens eine Bearbeitungsrolle (10, 10b, 11a), mit einer Antriebseinrichtung (12) verbunden, angetrieben drehbar ist.

2. Bearbeitungsmaschine nach Anspruch 1, dadurch gekennzeichnet, daß die Einrichtung zur rollenden Bearbeitung des Werkstücks (5, 5a) wenigstens eine angetriebene und sich an dem zu bearbeitenden Werkstück (5, 5a) abstützende Vorschubrolle (22a, 23) aufweist.

3. Bearbeitungsmaschine nach Anspruch 2, dadurch gekennzeichnet, daß die Vorschubrolle (22a, 23) mit der (den) angetriebenen Bearbeitungsrolle(n) (10, 10b, 11a) antriebsverbunden ist.

4. Bearbeitungsmaschine nach Anspruch 2 oder 3, dadurch gekennzeichnet, daß die Vorschubrolle (22a, 23) an ihrer an dem Werkstück (5, 5a) anliegenden Lauffläche einen Reibbelag aufweist.

5. Bearbeitungsmaschine nach einem der Ansprüche 1 bis 4, dadurch gekennzeichnet daß die Bearbeitungsrolle (10, 10a, 10b, 11, 11a, 11b) und das zugeordnete Bearbeitungsgegenstück (10, 10a, 10b, 11, 11a, 11b) um eine im wesentlichen senkrecht zu der Werkstückebene verlaufende Achse drehbar und in der jeweiligen Drehstellung arretierbar sind.

6. Bearbeitungsmaschine nach einem der Ansprüche 1 bis 5, dadurch gekennzeichnet, daß die Bearbeitungsrolle (10, 10a, 10b, 11, 11a, 11b) und/oder das Bearbeitungsgegenstück (10, 10a, 10b, 11, 11a, 11b) im wesentlichen senkrecht zu der Werkstückebene verschiebbar und in der jeweiligen Verschiebestellung arretierbar ist.

7. Bearbeitungsmaschine nach einem der Ansprüche 1 bis 6, wobei die Stanzeinrichtung an einer Seite des Werkstücks (5, 5a) einen im wesentlichen senkrecht zu dem Werkstück (5, 5a) heb- und senkbaren Stößel (20, 20a) mit einer Aufnahme (19, 19a) für einen austauschbaren Stanzstempel sowie an der gegenüberliegenden Seite des Werkstücks (5, 5a) eine dem Stanzstempel zugeordnete und an einem Matrizenhalter austauschbar gehaltene Stanzmatrize aufweist, dadurch gekennzeichnet, daß das eine Werkzeugteil (16, 16a) des Rollenwerkzeugs (9, 9a, 9b) an der Aufnahme (19, 19a) für den Stanzstempel mit dem Stößel (20, 20a) und das andere Werkzeugteil (17, 17a) mit dem Matrizenhalter der Stanzeinrichtung verbindbar ist.

8. Bearbeitungsmaschine nach Anspruch 7, wobei der Stanzstempel mittels eines Drehantriebs um eine im wesentlichen senkrecht zu der Werkstückebene verlaufende Achse drehbar ist, dadurch gekennzeichnet, daß die angetriebene(n) Bearbeitungsrolle(n) (10b) an dem dem Stößel (20a) zugeordneten Werkzeugteil (16a) vorgesehen und mittels des Drehantriebs für den Stanzstempel antreibbar ist (sind).

9. Bearbeitungsmaschine nach Anspruch 8, wobei der Stanzstempel in der Aufnahme des Stößels (20a) gegenüber diesem drehfest gehalten und der Stößel (20a) mittels des Drehantriebs um die im wesentlichen senkrecht zu dem Werkstück (5, 5a) verlaufende Achse drehbar ist, dadurch gekennzeichnet, daß die angetriebene(n) Bearbeitungsrolle(n) (10b) über ein Kegelradgetriebe mit einem Stößelkegelrad (35) und wenigstens einem Bearbeitungsrollenkegelrad (34) antreibbar ist (sind), wobei das Stößelkegelrad (35) konzentrisch mit der Drehachse des Stößels (20a) angeordnet und mit diesem drehfest verbunden ist und wobei das Bearbeitungsrollenkegelrad (34) konzentrisch mit der Drehachse der Bearbeitungsrolle (10b) angeordnet und mit dieser drehfest verbunden ist.

10. Bearbeitungsmaschine nach einem der Ansprüche 1 bis 9, dadurch gekennzeichnet, daß als Einrichtung zur rollenden Bearbeitung des Werkstücks (5, 5a) eine Rollenpreßeinrichtung, vorzugsweise eine Sickeneinrichtung, mit einem Rollenpreßwerkzeug vorgesehen ist, wobei die Werkzeugteile als Bearbeitungsrolle und als Bearbeitungsgegenstück zueinander komplementäre und das zu bearbeitende Werkstück (5, 5a) pressend beaufschlagende Formrollen aufweisen, von denen wenigstens eine, mit der Antriebseinrichtung verbunden, angetrieben drehbar ist.

11. Bearbeitungsmaschine nach einem der Ansprüche 1 bis 9, dadurch gekennzeichnet, daß als Einrichtung zur rollenden Bearbeitung des Werkstücks (5, 5a) eine Rollenschneideinrichtung (8, 8a, 8b) mit einem Rollenschneidwerkzeug (9, 9a, 9b) vorgesehen ist.

12. Bearbeitungsmaschine nach Anspruch 11, dadurch gekennzeichnet, daß die Werkzeugteile (16, 16a, 17, 17a) des Rollenschneidwerkzeugs (9, 9a, 9b) als Bearbeitungsrolle und als Bearbeitungsgegenstück jeweils eine Schneidrolle (10, 10a, 10b, 11, 11a, 11b) aufweisen und wobei wenigstens eine Schneidrolle (10, 10b, 11a), mit der Antriebseinrichtung (12) verbunden, angetrieben drehbar ist.

13. Bearbeitungsmaschine nach Anspruch 11, dadurch gekennzeichnet, daß an dem einen Werkzeugteil des Rolllenschneidwerkzeugs eine Schneidrolle und an dem anderen Werkzeugteil zwei mit Abstand in Richtung ihrer Drehachsen miteinander fluchtende Gegenschneidrollen vorgesehen sind, wobei die Schneidrolle und/oder wenigstens eine Gegenschneidrolle, mit der Antriebseinrichtung verbunden, angetrieben drehbar ist.

14. Bearbeitungsmaschine nach Anspruch 12, dadurch gekennzeichnet, daß unmittelbar benachbart zu den Schneidrollen (10a, 10b, 11a, 11b) jeweils eine konzentrisch mit der zugeordneten Schneidrolle (10a, 10b, 11a, 11b) angeordnete und sich an dem zu bearbeitenden Werkstück (5, 5a) abstüzende Druckrolle (22, 22a, 23, 23a) vorgesehen ist, wobei die Schneidrolle (10a, 10b, 11a, 11b) eines Werkzeugteils (16, 16a, 17, 17a) jeweils gegenüber der Druckrolle (22, 22a, 23, 23a) des anderen Werkzeugteils (16, 16a, 17, 17a) angeordnet ist und die Druckrollen (22, 22a, 23, 23a) wenigstens in dem dem Werkstück (5, 5a) zugewandten Bereich im wesentlichen senkrecht zu dem Werkstück (5, 5a) elastisch verformbar sind.

15. Bearbeitungsmaschine nach Anspruch 14, dadurch gekennzeichnet, daß die der angetriebenen Schneidrolle (10, 10b, 11a) zugeordnete Druckrolle (22a, 23) drehfest mit dieser verbunden ist.

## Claims

1. Processing machine for processing plate-like workpieces (5, 5a), having a punching device (7) and having at least one further processing device, characterised in that a device for the rolling processing of the workpiece (5, 5a) is provided as the further processing device and has at least one roller tool (9, 9a, 9b) comprising two tool portions (16, 16a, 17, 17a), the tool portions (16, 16a, 17, 17a) being arranged on opposite sides of the workpiece (5, 5a) to be processed and the one tool portion (16, 16a, 17, 17a) having at least one processing roller (10, 10a, 10b, 11, 11a, 11b) or the like which is displaceable relative to the workpiece (5, 5a) to be processed and which acts thereon, and at least one processing counterpart (10, 10a, 10b, 11, 11a, 11b) which cooperates with the processing roller (10, 10a, 10b, 11, 11a, 11b) being provided on the other tool portion (16, 16a, 17, 17a), and at least one processing roller (10, 10b, 11a), connected to a drive device (12), being rotatable in a driven manner.

2. Processing machine according to claim 1, characterised in that the device for the rolling processing of the workpiece (5, 5a) has at least one driven feed roller (22a, 23) resting on the workpiece (5, 5a) to be processed.

3. Processing machine according to claim 2, characterised in that the feed roller (22a, 23) is connected for drive to the driven processing roller(s) (10, 10b, 11a).

4. Processing machine according to claim 2 or 3, characterised in that the feed roller (22a, 23) has a friction coating on its contact face abutting the workpiece (5, 5a).

5. Processing machine according to any one of claims 1 to 4, characterised in that the processing roller (10, 10a, 10b, 11, 11a, 11b) and the associated processing counterpart (10, 10a, 10b, 11, 11a, 11b) are rotatable about an axis extending substantially perpendicularly to the plane of the workpiece and are lockable in the particular position into which they have been rotated.

6. Processing machine according to any one of claims 1 to 5, characterised in that the processing roller (10, 10a, 10b, 11, 11a, 11b) and/or the processing counterpart (10, 10a, 10b, 11, 11a, 11b) is (are) displaceable substantially perpendicularly to the plane of the workpiece and are lockable in the particular position into which they have been displaced.

7. Processing machine according to any one of claims 1 to 6, the punching device having, on one side of the workpiece (5, 5a), a ram (20, 20a) which can be raised and lowered substantially perpendicularly to the workpiece (5, 5a) and which has a receiving member (19, 19a) for a replaceable punch and, on the opposite side of the workpiece (5, 5a), a punching die which is associated with the punch and which is held in a replaceable manner on a die holder, characterised in that the one tool portion (16, 16a) of the roller tool (9, 9a, 9b) at the receiving member (19, 19a) for the punch is connectable to the ram (20, 20a) and the other tool portion (17, 17a) is connectable to the die holder of the punching device.

8. Processing machine according to claim 7, the punch being rotatable by means of a rotational drive about an axis extending substantially perpendicularly to the plane of the workpiece, characterised in that the driven processing roller(s) (10b) is (are) provided on the tool portion (16a) associated with the ram (20a) and is (are) drivable by means of the rotational drive for the punch.

9. Processing machine according to claim 8, the punch being held in the receiving member of the ram (20a) in such a manner that it is rotationally secure relative to the ram (20a), and the ram (20a) being rotatable by means of the rotational drive about the axis extending substantially perpendicularly to the workpiece (5, 5a), characterised in that the driven processing roller(s) (10b) is (are) drivable by means of bevel gearing having a bevel gear (35) for the ram and at least one bevel gear (34) for the processing roller, the ram bevel gear (35) being arranged concentrically with the axis of rotation of the ram (20a) and being connected to the ram (20a) in a rotationally secure manner, and the processing roller bevel gear (34) being arranged concentrically with the axis of rotation of the processing roller (10b) and being connected in a rotationally secure manner to the processing roller (10b).

10. Processing machine according to any one of claims 1 to 9, characterised in that a roller pressing device, preferably a creasing device, having a roller pressing tool is provided as the device for the rolling processing of the workpiece (5, 5a), the tool portions having, as the processing roller and as the processing counterpart, mutually complementary shaping rollers which act in compression on the workpiece (5, 5a) to be processed and at least one of which, connected to the drive device, is rotatable in a driven manner.

11. Processing machine according to any one of claims 1 to 9, characterised in that a roller cutting device (8, 8a, 8b) having a roller cutting tool (9, 9a, 9b) is provided as the device for the rolling processing of the workpiece (5, 5a).

12. Processing machine according to claim 11, characterised in that the tool portions (16, 16a, 17, 17a) of the roller cutting tool (9, 9a, 9b) have, as the processing roller and as the processing counterpart, in each case a cutting roller (10, 10a, 10b, 11, 11a, 11b), at least one cutting roller (10, 10b, 11a), connected to the drive device (12), being rotatable in a driven manner.

13. Processing machine according to claim 11, characterised in that a cutting roller is provided on the one tool portion of the roller cutting tool and two counter-cutting rollers which are spaced apart and aligned with one another in the direction of their axes of rotation are provided on the other tool portion, the cutting roller and/or at least one counter-cutting roller, connected to the drive device, being rotatable in a driven manner.

14. Processing machine according to claim 12, characterised in that a respective pressure roller (22, 22a, 23, 23a) which is arranged concentrically with the associated cutting roller (10a, 10b, 11a, 11b) and which rests on the workpiece (5, 5a) to be processed is provided immediately adjacent to each of the cutting rollers (10a, 10b 11a, 11b), the cutting roller (10a, 10b, 11a, 11b) of one tool portion (16, 16a, 17, 17a) being arranged opposite the respective pressure roller (22, 22a, 23, 23a) of the other tool portion (16, 16a, 17, 17a) and the pressure rollers (22, 22a, 23, 23a) being resiliently deformable substantially perpendicularly to the workpiece (5, 5a) at least in the region facing the workpiece (5, 5a).

15. Processing machine according to claim 14, characterised in that the pressure roller (22a, 23) associated with the driven cutting roller (10, 10b, 11a) is connected thereto in a rotationally secure manner.

## Revendications

1. Machine d'usinage pour usiner des pièces (5, 5a) en forme de plaques, comprenant un dispositif d'estampage (7), ainsi qu'au moins un dispositif supplémentaire d'usinage, caractérisée par le fait qu'il est prévu, en tant que dispositif supplémentaire d'usinage, un dispositif d'usinage de la pièce (5, 5a) par roulage, présentant au moins un outil de roulage (9, 9a, 9b) comprenant deux parties d'outillage (16, 16a, 17, 17a), les parties d'outillage (16, 16a, 17, 17a) étant disposées sur des côtés mutuellement opposés de la pièce (5, 5a) à usiner, et l'une (16, 16a, 17, 17a) des parties d'outillage comportant au moins un galet d'usinage (10, 10a, 10b, 11, 11a, 11b) ou élément similaire pouvant coulisser par rapport à la pièce (5, 5a) à usiner, et sollicitant cette dernière, l'autre partie d'outillage (16, 16a, 17, 17a) comportant au moins un organe d'usinage complémentaire (10, 10a, 10b, 11, 11a, 11b) coopérant avec le galet d'usinage (10, 10a, 10b, 11, 11a, 11b), et au moins un galet d'usinage (10, 10b, 11a), relié à un dispositif d'entraînement (12), pouvant être mené en rotation.

2. Machine d'usinage selon la revendication 1, caractérisée par le fait que le dispositif, destiné à usiner la pièce (5, 5a) par roulage, présente au moins un rouleau d'avance (22a, 23) qui est entraîné et prend appui sur la pièce (5, 5a) à usiner.

3. Machine d'usinage selon la revendication 2, caractérisée par le fait que le rouleau d'avance (22a, 23) est en liaison d'entraînement avec le(s) galet(s) d'usinage (10, 10b, 11a) entraîné(s).

4. Machine d'usinage selon la revendication 2 ou 3, caractérisée par le fait que le rouleau d'avance (22a, 23) présente une garniture de frottement sur sa surface de roulement appliquée contre la pièce (5, 5a).

5. Machine d'usinage selon l'une des revendications 1 à 4, caractérisée par le fait que le galet d'usinage (10, 10a, 10b, 11, 11a, 11b) et l'organe d'usinage complémentaire (10, 10a, 10b, 11, 11a, 11b) associé peuvent tourner autour d'un axe s'étendant, pour l'essentiel, perpendiculairement au plan de la pièce, et peuvent être arrêtés dans la position respectivement prise par rotation.

6. Machine d'usinage selon l'une des revendications 1 à 5, caractérisée par le fait que le galet d'usinage (10, 10a, 10b, 11, 11a, 11b), et/ou l'organe d'usinage complémentaire (10, 10a, 10b, 11, 11a, 11b), peu(ven)t coulisser pour l'essentiel perpendiculairement au plan de la pièce, et peu(ven)t être arrêté(s) dans la position respectivement prise par coulissement.

7. Machine d'usinage selon l'une des revendications 1 à 6, le dispositif d'estampage comprenant, d'un côté de la pièce (5, 5a), un coulisseau (20, 20a) levable et abaissable pour l'essentiel perpendiculairement à ladite pièce (5, 5a), muni d'un logement (19, 19a) destiné à un poinçon d'estampage remplaçable ; ainsi que, du côté opposé de la pièce (5, 5a), une matrice d'estampage affectée au poinçon d'estampage et retenue sur un porte-matrice, avec faculté de remplacement, caractérisée par le fait que l'une (16, 16a) des parties d'outillage de l'outil de roulage (9, 9a, 9b) peut être reliée au coulisscau (20, 20a) sur le logement (19, 19a) destiné au poinçon d'estampaqe, et l'autre partie d'outillage (17, 17a) peut être reliée au porte-matrice du dispositif d'estampage.

8. Machine d'usinage selon la revendication 7, le poinçon d'estampage pouvant tourner, au moyen d'un entraînement en rotation, autour d'un axe s'étendant pour l'essentiel perpendiculairement au plan de la pièce, caractérisée par le fait que le(s) galet(s) d'usinage entraîné(s) (10b) est (sont) prévu(s) sur la partie d'outillage (16a) associée au coulisseau (20a), et peu(ven)t être entraîné(s) au moyen de l'entraînement en rotation destiné au poinçon d'estampage.

9. Machine d'usinage selon la revendication 8, le poinçon d'estampage étant maintenu verrouillé en rotation par rapport au coulisseau (20a), dans le logement de ce dernier, et ledit coulisseau (20a) pouvant tourner, au moyen de l'entraînement en rotation, autour de l'axe s'étendant pour l'essentiel perpendiculairement à la pièce (5, 5a), caractérisée par le tait que le(s) galet(s) d'usinage entraîné(s) (10b) peu(ven)t être mené(s), par l'intermédiaire d'un engrenage conique, avec une roue conique (35) de coulisseau et au moins une roue conique (34) de galet d'usinage, la roue conique (35) du coulisseau étant disposée concentriquement à l'axe de rotation dudit coulisseau (20a) avec lequel elle est verrouillée en rotation, et la roue conique (34) du galet d'usinage étant disposée concentriquement à l'axe de rotation dudit galet d'usinage (10b) avec lequel elle est verrouillée on rotation.

10. Machine d'usinage selon l'une des revendications 1 à 9, caractérisée par le fait qu'il est prévu, en tant que dispositif destiné à usiner la pièce (5, 5a) par roulage, un dispositif de sertissage, de préférence un dispositif à moulurer équipé d'un outil de sertissage, les parties d'outillage comportant, en tant que galet d'usinage et en tant qu'organe d'usinage complémentaire, des galets de formage qui se complètent mutuellement, sollicitent par compression la pièce (5, 5a) à usiner, et dont au moins l'un, relié au dispositif d'entraînement, peut être mené en rotation.

11. Machine d'usinage selon l'une des revendications 1 à 9, caractérisée par le fait qu'il est prévu, en tant que dispositif destiné à usiner la pièce (5, 5a) par roulage, un dispositif (8, 8a, 8b) de découpage par galets équipé d'un outil (9, 9a, 9b) de découpage par galets.

12. Machine d'usinage selon la revendication 11, caractérisée par le fait que les parties d'outillage (16, 16a, 17, 17a) de l'outil (9, 9a, 9b) de découpage par galets comportent respectivement un galet de découpage (10, 10a, 10b, 11, 11a, 11b), en tant que galet d'usinage et en tant qu'organe d'usinage complémentaire, et au moins un galet de découpage (10, 10b, 11a), relié au dispositif d'entraînement (12), peut être mené en rotation.

13. Machine d'usinage selon la revendication 11, caractérisée par le fait qu'un galet de découpage est prévu sur l'une des parties d'outillage de l'outil de découpage par galets, et deux galets de contre-découpage, mutuellement alignés à distance dans la direction de leurs axes de rotation, sont prévus sur l'autre partie d'outillage, le galet de découpage et/ou au moins un galet de contre-découpage, relié(s) au dispositif d'entraînement, pouvant être mené(s) en rotation.

14. Machine d'usinage selon la revendication 12, caractérisée par le fait qu'il est respectivement prévu, au voisinage direct des galets de découpage (10a, 10b, 11a, 11b), un galet presseur (22, 22a, 23, 23a) disposé concentriquement au galet de découpage (10a, 10b, 11a, 11b) associé, et prenant appui sur la pièce (5, 5a) á usiner, le galet de découpage (10a, 10b, 11a, 11b) d'une partie d'outillage (16, 16a, 17, 17a) étant respectivement placé en vis-à-vis du galet preneur (22, 22a, 23, 23e) de l'autre partie d'outillage (16, 16a, 17, 17a), et les galets presseurs (22, 22a, 23, 23a) étant déformables élastiquement, pour l'essentiel perpendiculairement à la pièce (5, 5a), au moins dans la région tournée vers ladite pièce (5, 5a).

15. Machine d'usinage selon la revendication 14, caractérisée par le fait que le galet presseur (22a, 23), associé au galet de découpage (10, 10b, 11a) entraîné, est verrouillé on rotation avec ce dernier.
